# EUROPÄISCHE PATENTSCHRIFT

(11) **EP 1 616 837 B1**
(45) Veröffentlichungstag und Bekanntmachung des Hinweises auf die Patenterteilung: **25.05.2011**
(21) Anmeldenummer: 05014289.2
(22) Anmeldetag: 30.06.2005
(51) Int. Cl.: F15B 1/02, B66F 9/075, B60N 2/42, B60N 2/52

(54) **Flurförderzeug mit einem anhebbaren Fahrerplatz**
Lift truck with a liftable operator stand
Chariot élévateur avec poste de commande relevable

(30) Priorität: 02.07.2004 DE 102004032037
(43) Veröffentlichungstag der Anmeldung: 18.01.2006
(73) Patentinhaber: STILL SAS, 77716 Marne La Vallée Cedex 4 (FR)
(72) Erfinder: Cortier, Cyril, 95340 Bernes sur Oise (FR); Deperais, Hugues, 60700 Pont Sainte Maxence (FR)
(74) Vertreter: Geirhos, Johann

(56) Entgegenhaltungen:
- EP-A1- 0 049 786
- DE-A1-102004 045 698
- US-A- 5 657 834

## Beschreibung

Die Erfindung betrifft ein Flurförderzeug mit einem mittels einer als hydraulischer Hubantrieb ausgebildeten Antriebsvorrichtung in vorwiegend vertikaler Richtung verstellbaren Fahrerplatz, wobei mindestens eine Vorrichtung zur Reduzierung von Stoßeinwirkungen bei Verstellbewegungen des Fahrerplatzes vorgesehen ist. Flurförderzeuge werden zum innerbetrieblichen Warentransport eingesetzt und sind entsprechend der Vielzahl der Aufgaben in unterschiedlichen Ausführungsformen bekannt. Bei einigen dieser Aufgaben ist es von Vorteil, wenn der Fahrerplatz in seiner Höhe veränderlich angebracht ist.

Bei Gegengewichtsgabelstaplern kann so beispielsweise bei Bedarf eine bessere Sicht auf das Lastaufnahmemittel oder den Bereich davor erreicht werden. Besonders häufig sind vertikal verschiebbare Fahrerplätze aber bei Kommissioniergeräten anzutreffen. Bei Kommissionieraufgaben betätigt die Bedienperson vom Fahrerplatz aus nicht nur die Bedienelemente des Fahrzeugs, sondern nimmt auch Waren auf und legt diese beispielsweise in einer auf dem Lastaufnahmemittel mitgeführten Palette ab. Hierbei wird je nach der Höhe, in der die zu kommissionierende Ware gelagert ist, unterschieden zwischen Hochhub- und Niederhubkommissioniergeräten. Hochhubkommissionierer sind für Arbeitshöhen von mehreren Metern ausgelegt und besitzen zumeist eine relativ große Fahrerplattform, die auch die Bedienelemente trägt und als Ganzes zusammen mit dem Lastaufnahmemittel durch dessen Hubhydraulik angehoben wird.

Niederhubkommissionierer ähneln in ihrem Aufbau den weit verbreiteten Hubwagen und sind zumeist mit einer festen Fahrerplattform versehen, von der die Bedienperson bei Bedarf, um höher gelegene Regale zu erreichen, auf eine weitere Plattform aufsteigt. Da häufiges Auf- und Absteigen für die Bedienperson sehr ermüdend ist, sind bei diesen Geräten auch Ausführungen mit einer vertikal verstellbaren Fahrerplattform bekannt. Zum Anheben der Fahrerplattform wird dabei zumeist ein eigenständiges System mit einem hydraulischen oder elektrischen Antrieb verwendet.

Ähnliche Systeme finden auch bei Geräten Anwendung, bei denen die Fahrerplattform in ihrer Position relativ zu den Bedienelementen verstellbar ist, um für unterschiedlich große Bedienpersonen eine gleichermaßen gute Erreichbarkeit der Bedienelemente zu gewährleisten.

Ein wesentlicher Faktor bei der Produktivität eines Flurförderzeugs liegt in der Leistungsfähigkeit der Bedienperson. Diese kann beispielsweise durch unangenehme und anstrengende Arbeitsbedingungen und daraus resultierende Ermüdung erheblich eingeschränkt werden. Eine ermüdete Bedienperson stellt immer auch ein Sicherheitsrisiko dar, weshalb das Fahrzeug ein möglichst ermüdungsfreies und angenehmes Arbeiten ermöglichen sollte.

Ein wesentlicher Grund für eine Beeinträchtigung des Wohlbefindens und eine Ermüdung der Bedienperson können häufige starke Stoßeinwirkungen sein. Dies kann beispielsweise beim Anheben oder Absenken des Fahrerplatzes bei Fahrzeugen nach dem Stand der Technik geschehen, da diese Bewegung sehr unvermittelt einsetzt. Dies ist insbesondere bei Kommissionierfahrzeugen, bei denen der Fahrerplatz häufig auf- und abbewegt wird, der Fall. Auch für das Flurförderzeug selbst sind stoßartige Belastungsspitzen zu vermeiden, da dadurch die Lebensdauer einzelner Komponenten wesentlich verkürzt werden kann.

Permanent gefederte Fahrerplätze besitzen den Nachteil, dass der hierfür notwendige Mechanismus relativ aufwändig und schwer ist und daher die Antriebsvorrichtung für den Fahrerplatz eine erhöhte Hubleistung aufbringen muss. Die Federung ist zudem auf die beim Fahrbetrieb auftretenden Stöße abgestimmt und in ihrer Charakteristik nur schwer einstellbar. Weiterhin können gefederte Fahrerplätze, insbesondere bei Ein- und Ausstiegsvorgängen sowie bei größeren Hubhöhen, bei der Bedienperson aufgrund der Nachgiebigkeit ein Gefühl von Unsicherheit hervorrufen. Bei Kommissioniergeräten ist besonders nachteilig, dass bei der Aufnahme zusätzlicher Lasten, beispielsweise, wenn eine Bedienperson Gegenstände aus einem Regal entnimmt und auf der Fahrerplattform belässt um einen weiteren Gegenstand einzuladen, aufgrund des zusätzlichen Gewichts die Federung der Fahrerplattform weiter einfedert und dadurch die Plattform absinkt. Dadurch wird die Erreichbarkeit weiterer Waren erschwert.

In der US 5 657 834 ist ein Flurförderzeug mit einem in vertikaler Richtung mittels eines hydraulischen Hubantriebs anhebbaren bzw. absenkbaren Fahrerstand offenbart. Um an den Endanschlägen bei vollständig angehobenem Fahrerstand oder vollständig abgesenktem Fahrerstand Stöße zu vermeiden, sind Vorrichtungen zur Reduzierung von Stoßeinwirkungen vorgesehen. Die Vorrichtungen bestehen jeweils aus einer Feder und einem Gummipuffer. Eine Vorrichtung ist zwischen dem anhebbaren Fahrerstand und dem unteren Bereich eines Standmastes angeordnet und vermindert den Stoß bei Erreichen eines unteren Endanschlags des Fahrerstandes. Eine zweite Vorrichtung ist zwischen dem anhebbaren Fahrerstand und dem oberen Ende eines Ausfahrmastes angeordnet, um den Stoß bei Erreichen am oberen Endanschlag zu vermeiden, wenn der Fahrerstand mittels eines Freihubzylinders relativ zu dem Ausfahrmast vollständig angehoben ist.

Der Erfindung liegt daher die Aufgabe zugrunde, ein Flurförderzeug mit einem mittels einer Antriebsvorrichtung in vorwiegend vertikaler Richtung verstellbaren Fahrerplatz zu schaffen, das übermäßige Belastungen der Bedienperson und die daraus resultierende Ermüdung bei Verstellbewegungen des Fahrerplatzes deutlich reduziert, einfach aufgebaut ist und der Bedienperson ein sicheres Standgefühl vermittelt sowie eine übermäßige mechanische Beanspruchung von Komponenten des Fahrzeugs verringert.

Diese Aufgabe wird erfindungsgemäß dadurch gelöst, dass die Vorrichtung zur Reduzierung von Stoßeinwirkungen mindestens einen hydraulischen Druckspeicher, vorzugsweise als Druckbehälter mit einer Gasfüllung ausgebildet, aufweist und der hydraulische Druckspeicher mit einem Hydraulikkreis des hydraulischen Hubantriebs zur Verstellung des Fahrerplatzes derart verbindbar ist, dass bei Verstellvorgängen des Fahrerarbeitsplatzes der hydraulische Druckspeicher mit dem Hydraulikkreis verbunden ist und bei Stillstand des Fahrerarbeitsplatzes der hydraulische Druckspeicher von dem Hydraulikkreis abgekoppelt ist. Indem die Stoßeinwirkungen des plötzlich in Betrieb gehenden Verstellmechanismus abgefedert werden, wird die Belastung der Bedienperson und der Komponenten des Fahrzeugs erheblich reduziert. Wird die Vorrichtung nur bei Verstellbewegungen des Fahrerplatzes aktiv, hat die Bedienperson bei ansonsten feststehendem Fahrerplatz ein sicheres Gefühl. Da die Vorrichtung an beliebiger Stelle im Kraftübertragungsstrang zwischen Antrieb und Bedienperson platziert werden kann, kann ein vorteilhafter Einbauort gewählt werden, um beispielsweise das Gewicht des Fahrerplatzes nicht unnötig zu erhöhen und einen möglichst einfachen Aufbau zu erreichen.

Hydraulische Antriebe sind in Flurförderzeugen beispielsweise als Hubantrieb für das Lastaufnahmemittel oder als Antrieb oder Unterstützung einer Lenkung häufig bereits vorhanden. Viele Vorrichtungen zu Versorgung dieser Antriebe, wie beispielsweise Pumpen und Druckspeicher, können auch zur Versorgung eines hydraulischen Hubantriebs für die Verstellung des Fahrerplatzes verwendet werden, wodurch sich ein einfacher und kostengünstiger Aufbau ergibt. Hydraulische Druckspeicher sind einfach aufgebaut, an beinahe beliebiger Stelle in das Fahrzeug integrierbar und können gut in ihrer Federwirkung variiert werden. Dadurch dass der hydraulische Druckspeicher mit dem Hydraulikkreis des hydraulischen Hubantriebs zur Verstellung des Fahrerarbeitplatzes verbunden ist wird ein besonders einfacher und effektiver Aufbau erzielt, da die Stöße, die durch die Hebehydraulik eingeleitet werden, direkt an ihrem Entstehungsort abgefangen werden. Dadurch sind nur wenige Komponenten stoßartigen Beanspruchungen unterworfen.

Zweckmäßigerweise ist zur Verbindung des Hydraulikkreises mit dem hydraulischen Druckspeicher mindestens ein Schaltventil zur Umschaltung von einer Sperrstellung in eine Durchflussstellung vorgesehen. Dadurch kann der hydraulische Druckspeicher vom Hydraulikkreis abgekoppelt werden.

In einer zweckmäßigen Ausgestaltung ist das Schaltventil zur Verbindung des Hydraulikkreises mit dem hydraulischen Druckspeicher gleichzeitig mit einem Schaltventil zur Verbindung des hydraulischen Hubantriebs mit einer hydraulischen Druckversorgungsvorrichtung schaltbar. Dadurch wird bei geöffneter Zuleitung zum hydraulischen Hubantrieb, also bei Verstellvorgängen, automatisch auch der hydraulische Druckspeicher zur Verringerung von Stößen zugeschaltet, während bei Stillstand des Fahrerplatzes, wenn eine ungewollte Bewegung der Plattform beispielsweise beim Auf- und Abspringen der Bedienperson, vermieden werden soll, diese arretiert ist.

Vorteilhafterweise ist vor einer Aktivierung der hydraulischen

Druckversorgungsvorrichtung eine Verbindung zwischen dem hydraulischen Hubantrieb und dem hydraulischen Druckspeicher herstellbar. Dadurch wird der durch das Einschalten der hydraulischen Druckversorgungsvorrichtung im Hydrauliksystem erzeugte Einschaltstoß sicher abgefangen.

Weiterhin ist es vorteilhaft, wenn die Verbindung zwischen dem hydraulischen Hubantrieb und dem hydraulischen Druckspeicher erst nach Deaktivierung der hydraulischen Druckversorgungsvorrichtung trennbar ist. Dadurch wird der beim Abstellen der Druckversorgungsvorrichtung erzeugte Stoß im Hydrauliksystem sicher abgefangen.

Es ist von Vorteil, wenn die Federungswirkung der Vorrichtung zur Reduzierung von Stoßeinwirkungen bei Verstellbewegungen des Fahrerplatzes einstellbar ist. Dadurch ist eine Anpassung an unterschiedliche Betriebszustände, beispielsweise Gewicht und Belastung des Fahrerplatzes oder Antriebscharakteristik der Hubvorrichtung möglich.

In einer zweckmäßigen Ausgestaltung ist der Fahrerplatz als Fahrerstandplattform ausgebildet. Fahrerstandplattformen bieten besonders schnellen Zu- und Abgang. Die Vorteile der Erfindung sind für ein Fahrzeug mit stehender Bedienperson besonders deutlich, da ein stehender Fahrer Stöße oder ein unsicheres Standgefühl besonders deutlich empfindet und dadurch besonders schnell ermüdet.

In einer weiteren zweckmäßigen Ausgestaltung ist der Fahrerplatz mit einem Fahrersitz versehen. Fahrersitze sind besonders bei längerem Betrieb für die Bedienperson angenehmer und ermöglichen längeres ermüdungsfreies Arbeiten.

Es ist weiterhin zweckmäßig, wenn das Flurförderzeug als Kommissionierfahrzeug ausgebildet ist. Bei derartigen Flurförderzeugen besitzt die Erfindung besonders großen Nutzen, da die Nachteile des Standes der Technik besonders ausgeprägt sind.

Weitere Vorteile und Einzelheiten der Erfindung werden anhand des in den schematischen Figuren dargestellten Ausführungsbeispiels näher erläutert. Dabei zeigt
- Fig. 1: einen Kommissionierer als Beispiel für ein erfindungsgemäßes Flurförderzeug,
- Fig. 2: ein Schema der hydraulischen Anlage eines erfindungsgemäßen Flurförderzeugs.

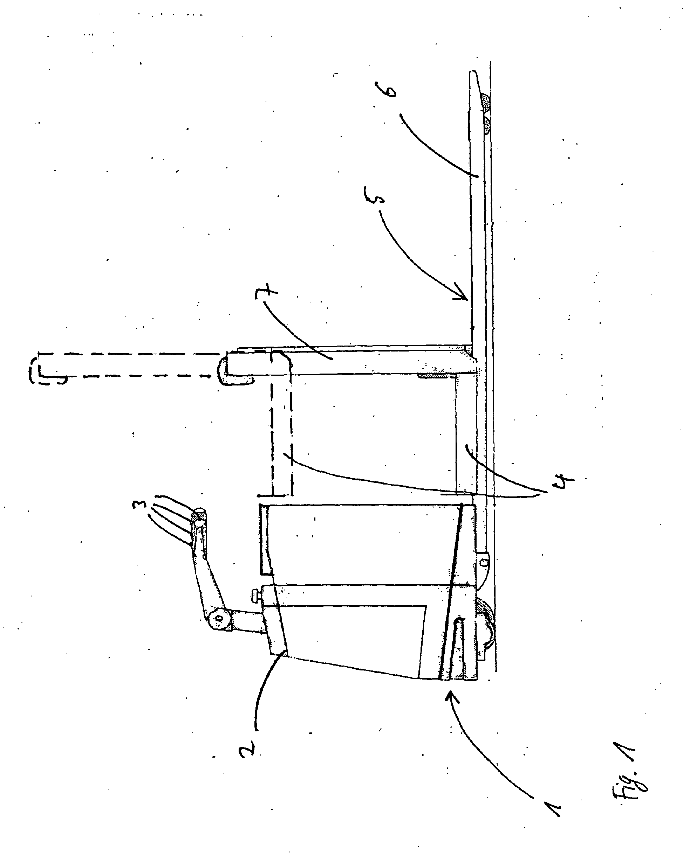

Figur 1 zeigt als erfindungsgemäßes Flurförderzeug einen Kommissionierer 1. Hinter einem Antriebsteil 2, das neben dem hier nicht dargestellten elektrischen Fahrantrieb Bedienelemente 3 sowie eine hier nicht dargestellte Batterie umfasst, ist der Fahrerplatz 4 in Form einer anhebbaren Fahrerstandplattform 4 angeordnet. Hinter dem Fahrerplatz 4 befindet sich ein Lastteil 5, das aus einem Lastaufnahmemittel 6 und einer in einem Gehäuse 7 angeordneten, hier nicht dargestellten Hubhydraulik zum Anheben des Lastaufnahmemittels 6 besteht. Das Gehäuse 7 dient auch als Abtrennung zwischen Fahrerplatz 4 und Lastaufnahmemittel 6. Gestrichelt dargestellt ist die angehobene Position der Fahrerstandplattform 4.

Die Bedienperson steht beim Betrieb des Fahrzeugs 1 auf der Fahrerstandplattform 4 und steuert die Fahrzeugfunktionen über die Bedienelemente 3. Beim Kommissionieren von Waren entnimmt die Bedienperson diese üblicherweise einem Regal und legt sie in einem auf dem Lastaufnahmemittel 6 befindlichen Lastträger, beispielsweise einer Gitterbox oder einer Palette, ab. Waren in höheren Regalebenen sind in der dargestellten Position der Fahrerstandplattform 4 nicht oder nur in ergonomisch ungünstiger Haltung entnehmbar. Um auch diese Ebenen bequem zu erreichen, kann die Bedienperson die Fahrerstandplattform 4 mittels eines hier nicht dargestellten Hydraulikzylinders anheben.

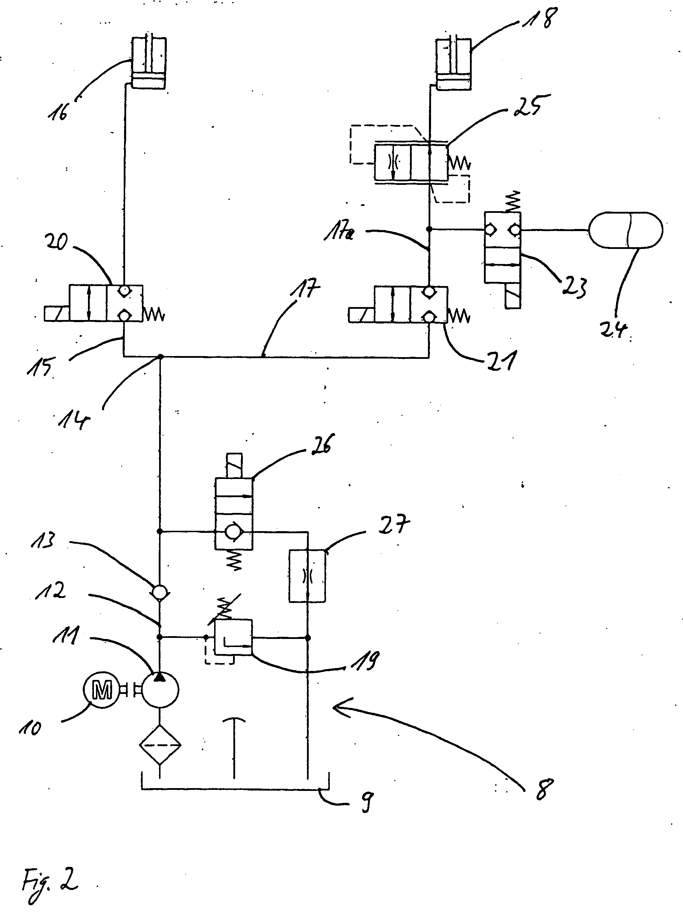

Der Hubzylinder ist Teil einer in Figur 2 schematisch dargestellten hydraulischen Anlage 8. Aus einem Tank 9 fördert eine von einem Elektromotor 10 angetriebene Hydraulikpumpe 11 Hydraulikflüssigkeit über eine Leitung 12 und ein Rückschlagventil 13 zu einem Verteilerpunkt 14, wo der Hydraulikkreis in eine Leitung 15 zur Versorgung des Hubantriebs 16 des Lastaufnahmemittels 6 und eine Leitung 17 zur Versorgung des Hubantriebes 18 der Fahrerstandplattform 4 verzweigt. Überschüssige Hydraulikflüssigkeit wird von der Pumpe 11 über ein druckabhängiges Schaltventil 19 direkt in den Tank 9 zurückgeleitet. Über die Leitung 15 und ein Schaltventil 20 wird der Hubzylinder 16 des Lastaufnahmemittels 6 mit der Hydraulikflüssigkeit versorgt. Über die Leitung 17, 17a und ein Schaltventil 21 gelangt die Hydraulikflüssigkeit zum Hubzylinder 18 der Fahrerstandplattform 4. Zwischen Schaltventil 21 und Hubzylinder 18 zweigt eine Hydraulikleitung 22 zum Schaltventil 23 ab, das zwischen einem hydraulischen Druckspeicher 24 und der Leitung 17a angeordnet ist. Ebenfalls zwischen Schaltventil 21 und Hubzylinder 18 angeordnet ist ein als Senkbremse für die Fahrerstandplattform 4 betriebenes Druckregelventil 25. Dieses dient dazu, beim Absenken der Fahrerstandplattfom 4 die Senkgeschwindigkeit zu begrenzen. Bei Senkvorgängen des Lastaufnahmemittels 6 oder der Fahrerstandplattform 4 wird die zurückfließende Hydraulikflüssigkeit über ein Schaltventil 26 und ein Druckbegrenzungsventil 27 in den Tank 9 zurückgeführt.

Betätigt die Bedienperson eines der Bedienelemente 3, um die Fahrerstandplattform 4 anzuheben, werden zunächst die Schaltventile 21 und 23 geöffnet, so dass eine Verbindung zwischen dem Hubzylinder 18, dem Druckspeicher 24 und der Hydraulikpumpe 11 besteht. Nach einer geeignet gewählten Zeit wird die elektrisch betriebene Hydraulikpumpe 11 aktiviert. Der beim Einschalten der Pumpe 11 durch die schlagartige Druckerhöhung in die Hydraulikleitung 17 eingebrachte Stoß wird durch das Gaspolster im Druckspeicher 24 abgedämpft. Der Hubzylinder 18 fährt aus und hebt die Fahrerstandplattform 4 an, bis die gewünschte Lage erreicht ist und die Bedienperson das Betätigungselement 3 für die Hubfunktion loslässt, wodurch die Pumpe 11 abgestellt wird. Die Schaltventile 21 und 23 bleiben noch geöffnet, so dass der Druckspeicher 24 weiterhin mit dem Hydraulikkreis 17 verbunden bleibt. Dadurch wird der Stoß, der durch das schlagartige Abstellen der Pumpe 11 entsteht, abgefedert. Die Fahrerstandplattform 4 bleibt in der erreichten Hubposition, da durch das Rückschlagventil 13 und das Schaltventil 26 ein Zurückströmen der Hydraulikflüssigkeit in den Tank 9 verhindert wird. Nach einer geeignet gewählten Zeit schließen die Ventile 21 und 23 und die Fahrerstandplattform 4 verbleibt auf der gewählten Höhe.

Zum Absenken der Plattform 4 betätigt die Bedienperson wiederum ein entsprechendes Bedienelement 3, wodurch zunächst die Schaltventile 21 und 23 geöffnet werden, so dass der Druckspeicher 24 mit der Hydraulikleitung 17a verbunden ist. Nach einer geeigneten Zeitspanne wird das Schaltventil 26 geöffnet, so dass die Hydraulikflüssigkeit in den Tank 9 zurückfließen kann. Dabei wird durch die Druckminderungsventile 25 und 27 die Senkgeschwindigkeit gebremst.

Ist die gewünschte Höhe erreicht, lässt die Bedienperson das Betätigungselement 3 für den Senkvorgang los und das Schaltventil 26 wird geschlossen. Der daraus resultierende Stoß in der Hydraulikleitung 17 wird wiederum durch den Druckspeicher 24 gedämpft. Nach einer geeigneten Zeit schließen auch die Schaltventile 21 und 23 und die Fahrerstandplattform 4 behält die erreichte Höhe bei.

Durch geeignete Schaltung der Schaltventile 20, 21, 23, 26 werden Konflikte aus der gleichzeitigen Betätigung der Hebevorrichtungen 16, 18 für die Fahrerstandplattform 4 und das Lastaufnahmemittel 6 vermieden.

Die Charakteristik der Federung kann durch die Gasfüllung im Druckspeicher 24 variiert werden. Durch eine größere Gasfüllungsmenge bei unbelastetem Druckspeicher 24 kann so beispielsweise eine weichere Federung erreicht werden. Durch Größe der verwendeten Leitungsquerschnitte können die Dämpfungseigenschaften, die das Nachschwingen der Fahrerstandplattform 4 beeinflussen, verändert werden. Durch Variation dieser Größen kann die Wirkung der Stoßdämpfungsvorrichtung optimal auf das Gesamtgewicht von Fahrerstandplattform 4 und Bedienperson sowie die verwendeten Hydraulikkomponenten abgestimmt werden. Es sind Ausführungsformen denkbar, bei denen diese Größen im Betrieb oder durch Servicepersonal verändert werden können, um eine optimale Anpassung zu erreichen.

Neben der im Ausführungsbeispiel gezeigten hydraulischen Anlage 8 sind weitere Ausführungsformen nach dem Stand der Technik denkbar. Insbesondere die Betätigung der Schaltventile kann sowohl manuell als auch elektrisch oder durch andere geeignete Mittel erfolgen. Auch können beispielsweise die Schaltventile 21 und 23 sowohl getrennt als auch in einem gemeinsamen Zylinderblock angeordnet sein, wie generell die Zusammenfassung einzelner Komponenten in gemeinsame Baugruppen als übliche Maßnahme anzusehen ist. Beispielsweise können allerdings auch für die hydraulischen Antriebe 16, 18 von Lastaufnahmemittel 6 und Fahrerstandplattform 4 getrennte Hydraulikanlagen vorgesehen sein. Selbstverständlich sind erfindungsgemäß ebenso andere Ausführungsformen eines Flurförderzeugs, wie beispielsweise Gegengewichtsgabelstapler mit einem als Fahrerkabine mit Fahrersitz ausgebildeten Fahrerplatz, möglich.

## Patentansprüche

1. Flurförderzeug mit mindestens einem mittels einer als hydraulischer Hubantrieb ausgebildeten Antriebsvorrichtung (8) in vorwiegend vertikaler Richtung verstellbaren Fahrerplatz (4), wobei mindestens eine Vorrichtung zur Reduzierung von Stoßeinwirkungen bei Verstellbewegungen des Fahrerplatzes (4) vorgesehen ist, **dadurch gekennzeichnet, dass** die Vorrichtung zur Reduzierung von Stoßeinwirkungen mindestens einen hydraulischen Druckspeicher (24), vorzugsweise als Druckbehälter mit einer Gasfüllung ausgebildet, aufweist und der hydraulische Druckspeicher (24) mit einem Hydraulikkreis (17) des hydraulischen Hubantriebs (18) zur Verstellung des Fahrerplatzes (4) derart verbindbar ist, dass bei Verstellvorgängen des Fahrerplatzes (4) der hydraulische Druckspeicher (24) mit dem Hydraulikkreis (17) verbunden ist und bei Stillstand des Fahrerplatzes (4) der hydraulische Druckspeicher (24) von dem Hydraulikkreis (17) abgekoppelt ist.

2. Flurförderzeug nach Anspruch 1, **dadurch gekennzeichnet, dass** zur Verbindung des Hydraulikkreises (17) mit dem hydraulischen Druckspeicher (24) mindestens ein Schaltventil (23) zur Umschaltung von einer Sperrstellung in eine Durchflussstellung vorgesehen ist.

3. Flurförderzeug nach Anspruch 1 oder 2, **dadurch gekennzeichnet, dass** das Schaltventil (23) zur Verbindung des Hydraulikkreises (17) mit dem hydraulischen Druckspeicher (24) gleichzeitig mit einem Schaltventil (21) zur Verbindung des hydraulischen Hubantriebs (18) mit einer hydraulischen Druckversorgungsvorrichtung schaltbar ist.

4. Flurförderzeug nach einem der Ansprüche 1 bis 3, **dadurch gekennzeichnet, dass** vor einer Aktivierung der hydraulischen Druckversorgungsvorrichtung eine Verbindung zwischen dem hydraulischen Hubantrieb (18) und dem hydraulischen Druckspeicher (24) herstellbar ist

5. Flurförderzeug nach einem der Ansprüche 1 bis 4, **dadurch gekennzeichnet, dass** die Verbindung zwischen dem hydraulischen Hubantrieb (18) und dem hydraulischen Druckspeicher (24) erst nach Deaktivierung der hydraulischen Druckversorgungsvorrichtung trennbar ist.

6. Flurförderzeug nach einem der Ansprüche 1 bis 5, **dadurch gekennzeichnet, dass** die Federungswirkung der Vorrichtung zur Reduzierung von Stoßeinwirkungen bei Verstellbewegungen des Fahrerplatzes (4) einstellbar ist.

7. Flurförderzeug nach einem der Ansprüche 1 bis 6, **dadurch gekennzeichnet, dass** der Fahrerplatz (4) als Fahrerstandplattform (4) ausgebildet ist.

8. Flurförderzeug nach einem der Ansprüche 1 bis 7, **dadurch gekennzeichnet, dass** der Fahrerplatz (4) mit einem Fahrersitz versehen ist.

9. Flurförderzeug nach einem der Ansprüche 1 bis 8, **dadurch gekennzeichnet, dass** das Flurförderzeug als Kommissionierfahrzeug (1) ausgebildet ist.

## Claims

1. Industrial truck with at least one driver's station (4), which can be adjusted by means of a drive apparatus (8) in the form of a hydraulic linear drive in the predominantly vertical direction, with at least one apparatus for reducing impact effects during adjustment movements of the driver's station (4) being provided, **characterized in that** the apparatus for reducing impact effects has at least one hydraulic accumulator (24), preferably in the form of a pressure vessel with a gas filling, and the hydraulic accumulator (24) can be connected to a hydraulic circuit (17) of the hydraulic linear drive (18) for adjustment of the driver's station (4) in such a way that, during adjustment operations of the driver's station (4), the hydraulic accumulator (24) is connected to the hydraulic circuit (17) and, when the driver's station (4) is at a standstill, the hydraulic accumulator (24) is decoupled from the hydraulic circuit (17).

2. Industrial truck according to Claim 1, **characterized in that** at least one switching valve (23) for switching over from a blocking position to a throughflow position is provided for connecting the hydraulic circuit (17) to the hydraulic accumulator (24).

3. Industrial truck according to Claim 1 or 2, **characterized in that** the switching valve (23) for connecting the hydraulic circuit (17) to the hydraulic accumulator (24) can be switched at the same time as a switching valve (21) for connecting the hydraulic linear drive (18) to a hydraulic pressure supply apparatus.

4. Industrial truck according to one of Claims 1 to 3, **characterized in that**, prior to activation of the hydraulic pressure supply apparatus, a connection can be produced between the hydraulic linear drive (18) and the hydraulic accumulator (24).

5. Industrial truck according to one of Claims 1 to 4, **characterized in that** the connection between the hydraulic linear drive (18) and the hydraulic accumulator (24) can only be disconnected after deactivation of the hydraulic pressure supply apparatus.

6. Industrial truck according to one of Claims 1 to 5, **characterized in that** the spring action of the apparatus for reducing impact effects during adjustment movements of the driver's station (4) can be set.

7. Industrial truck according to one of Claims 1 to 6, **characterized in that** the driver's station (4) is in the form of a driver's platform (4).

8. Industrial truck according to one of Claims 1 to 7, **characterized in that** the driver's station (4) is provided with a driver's seat.

9. Industrial truck according to one of Claims 1 to 8, **characterized in that** the industrial truck is in the form of an order picker (1).

## Revendications

1. Chariot de manutention comprenant au moins un poste de conduite (4) réglable dans la direction principalement verticale au moyen d'un dispositif d'entraînement (8) réalisé sous forme d'entraînement de levage hydraulique, au moins un dispositif pour réduire l'effet des chocs lors de déplacements de réglage du poste de conduite (4) étant prévu, **caractérisé en ce que** le dispositif pour réduire l'effet des chocs présente au moins un accumulateur de pression hydraulique (24), de préférence réalisé sous forme de récipient sous pression avec un remplissage de gaz, et l'accumulateur de pression hydraulique (24) peut être connecté à un circuit hydraulique (17) de l'entraînement de levage hydraulique (18) pour régler le poste de conduite (4), de telle sorte que lors d'opérations de réglage du poste de conduite (4), l'accumulateur de pression hydraulique (24) soit connecté au circuit hydraulique (17) et que lors de l'immobilisation du poste de conduite (4), l'accumulateur de pression hydraulique (24) soit désaccouplé du circuit hydraulique (17).

2. Chariot de manutention selon la revendication 1, **caractérisé en ce que** pour connecter le circuit hydraulique (17) à l'accumulateur de pression hydraulique (24), on prévoit au moins une soupape de commutation (23) pour passer d'une position de blocage dans une position d'écoulement.

3. Chariot de manutention selon la revendication 1 ou 2, **caractérisé en ce que** la soupape de commutation (23) pour la connexion du circuit hydraulique (17) à l'accumulateur de pression hydraulique (24) peut être commutée simultanément avec une soupape de commutation (21) pour la connexion de l'entraînement de levage hydraulique (18) à un dispositif d'alimentation en pression hydraulique.

4. Chariot de manutention selon l'une quelconque des revendications 1 à 3, **caractérisé en ce qu'**avant une activation du dispositif d'alimentation en pression hydraulique, une connexion entre l'entraînement de levage hydraulique (18) et l'accumulateur de pression hydraulique (24) peut être établie.

5. Chariot de manutention selon l'une quelconque des revendications 1 à 4, **caractérisé en ce que** la connexion entre l'entraînement de levage hydraulique (18) et l'accumulateur de pression hydraulique (24) peut être séparée seulement après la désactivation du dispositif d'alimentation en pression hydraulique.

6. Chariot de manutention selon l'une quelconque des revendications 1 à 5, **caractérisé en ce que** l'effet de suspension du dispositif pour réduire l'effet des chocs lors de déplacements de réglage du poste de conduite (4) peut être ajusté.

7. Chariot de manutention selon l'une quelconque des revendications 1 à 6, **caractérisé en ce que** le poste de conduite (4) est réalisé sous forme de plate-forme de station debout (4).

8. Chariot de manutention selon l'une quelconque des revendications 1 à 7, **caractérisé en ce que** le poste de conduite (4) est pourvu d'un siège de conducteur.

9. Chariot de manutention selon l'une quelconque des revendications 1 à 8, **caractérisé en ce que** le chariot de manutention est réalisé sous forme de véhicule de préparation des commandes (1).
